# EUROPÄISCHE PATENTSCHRIFT

(11) **EP 0 422 422 B1**
(45) Veröffentlichungstag und Bekanntmachung des Hinweises auf die Patenterteilung: **20.10.1993**
(21) Anmeldenummer: 90118064.6
(22) Anmeldetag: 20.09.1990
(51) Int. Cl.: B23K 37/047

(54) **Verfahren zum automatischen Beladen eines Flurförderes**
Method for automatically loading a floor conveyor
Méthode de chargement automatique d'un convoyeur de sol

(30) Priorität: 12.10.1989 DE 3934109
(43) Veröffentlichungstag der Anmeldung: 17.04.1991
(73) Patentinhaber: Oxytechnik Ges. für Systemtechnik mbH, 65760 Eschborn (DE)
(72) Erfinder: Lentz, Gerhard, D-6272 Niedernhausen 3 (DE); Wilkens, Günter, D-6233 Kelkheim (DE)
(74) Vertreter: Roesner, Werner

(56) Entgegenhaltungen:
- DE-C- 3 742 175
- SOVIET INVENTIONS ILLUSTRATED,Sektion M,Woche B26,8 August 1979,Derwent Publications Ltd, &SU-A-622-610(ISAAKYAN V R) 31-07-1978
- SOVIET INVENTIONS ILLUSTRATED,Sektion M,Woche B26,8 August 1979,Derwent Publications Ltd,&SU-A-621-516(ENERGOTEKHPROMEXP) 02-08-1978 *Klasse P55,Nr.F6370B/26
- SOVIET INVENTIONS ILLUSTRATED,Sektion M,Woche 8812,24 März 1988,Derwent Publications Ltd, &SU-A-1328-127(ARUSTAMOV E P) 07-08-1987*Klasse M23,Nr.88-082294/12

## Beschreibung

Die Erfindung betrifft ein Verfahren zum automatischen Beladen eines Flurförderers mit stabförmigen Profilen, welche in einer Profilbearbeitungsstation mit einem thermischen Werkzeug bearbeitet und mittels einer Transporteinrichtung aus dem Bearbeitungsbereich gefördert werden.

Im Schiffbau werden flache Blechplatten benötigt, die mit stabartigen Profilen versteift werden. Die stabartigen Profile erhalten hierzu vielfältige Loch- und Endabschnitte. Dazu wird ein thermisches Werkzeug verwendet.

Es sind unterschiedliche Vorrichtungen und Verfahren bekannt geworden, um die Fertigung von derartigen versteiften Blechkonstruktionen zu rationalisieren. Der Anteil der manuellen Arbeit ist jedoch in Teilbereichen noch immer erheblich.

Aus der DE-C2 35 10 381 ist eine Profilbearbeitungsstation bekannt, mittels der eine Vielzahl unterschiedlicher Formschnitte im Inneren der Profile oder an deren Enden vorteilhaft vorgenommen werden kann. Dabei werden die Profile innerhalb der Profilbearbeitungsstation mittels eines aus der DE-C2 35 46 656 bekannten Meßwagens exakt positioniert. Nach der Bearbeitung wird das auf Maß geschnittene Profil mit einer aus der DE-C1-37 42 175 bekannten Vorrichtung zum seitlichen Greifen der Profile aus dem Schneidbereich des Schneidroboters gefördert.

Es ist weiterhin für die Fertigung von versteiften Blechkonstruktionen eine Profilaufsetz- und Schweißstation bekannt, der ein Flurförderer, in dem die bearbeiteden stabförmigen Profile definiert abgelegt sind, zugeordnet ist. Durch die Profilaufsetz- und Schweißstation können die stabförmigen Profile automatisch aus dem Flurförderer entnommen und auf den Blechplatten positioniert und mit diesen verschweißt werden (DE-C2-34 37 125). Eine weitere Vorrichtung zum Transport von Stahlprofilstangen und zu deren Verschweißung mit einer Blechplatte ist aus der DE-A- 21 02 363 bekannt.

Ausgehend von dem eingangs genannten Stand der Technik liegt der Erfindung die Aufgabe zugrunde, den Fertigungsablauf bei der Herstellung von versteiften Blechplatten weiter zu automatisieren und insbesondere ein Verfahren und eine Vorrichtung zu schaffen, mit der ein automatisches Beladen eines Flurförderers in einfacher Weise ermöglicht wird.

Diese Aufgabe wird erfindungsgemäß dadurch gelöst, daß die bearbeiteten Profile mittels Greifer gefaßt und axial aufgerichtet werden und daß die Profile von einem verfahrbaren Greifer in axialer Position übernommen und zu dem Flurförderer transportiert werden, wo sie lage- und positionsgerecht abgelegt werden.

Durch die Erfindung wird erstmals ein von einer Steuerung gesteuerter automatischer Betrieb - ausgehend von der Profilbearbeitung bis zum Schweißen der Profile auf Blechplatten - möglich.

Weitere vorteilhafte Ausgestaltungen des Verfahrens und der einfach aufgebauten Vorrichtung ergeben sich aus den Merkmalen der Unteransprüche.

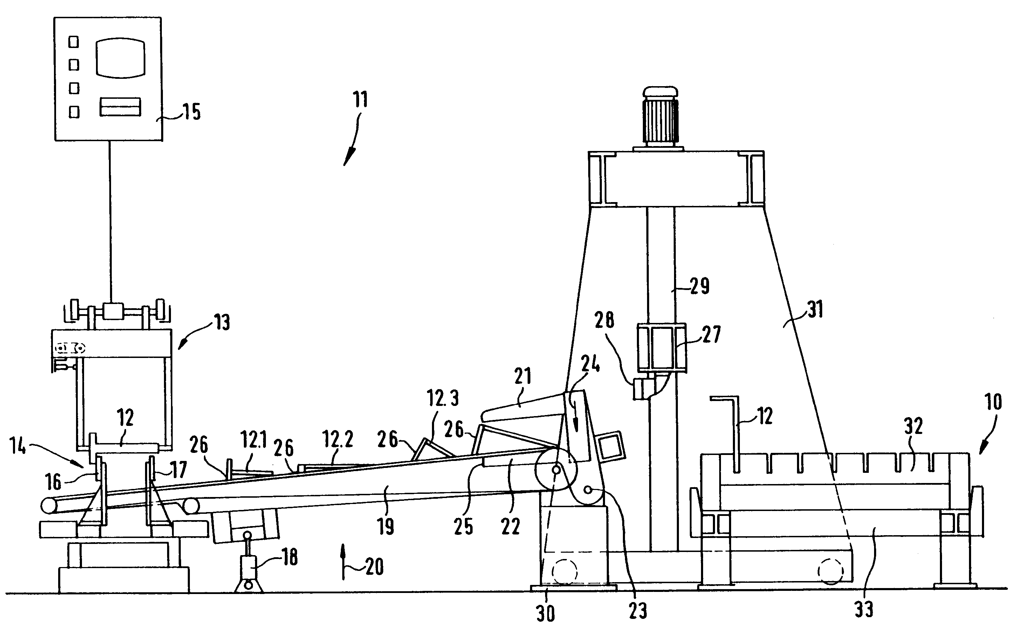

In der Zeichnung ist die Vorrichtung zum automatischen Beladen eines Flurförderers 10 in ihrer Gesamtheit mit 11 bezeichnet. Da wesentliche Teile der Gesamtanlage von dem gleichen Anmelder bereits in den Schutzrechten DE-C2- 35 10 381, DE-C2-35 46 656 sowie DE-C2-37 42 174 und DE-C2-37 42 175 beschrieben worden sind, können hierzu nähere Angaben entfallen.

Die stabförmigen Profile 12 werden nach der thermischen Bearbeitung in einer nicht näher dargestellten Profilbearbeitungsstation mittels einer Vorrichtung 13 zum Greifen der Profile über einen Scheibenrollengang 14 aus dem Bearbeitungsbereich gefördert. Die Vorrichtung 13 ist mit einer nur schematisch dargestellten übergeordneten Steuerung 15 verbunden, mittels der der Bearbeitungsvorgang sowie der Zu- und Abtransport und das Beladen des Flurförderers 10 gesteuert wird. Die entsprechenden Steuerleitungen zu den einzelnen Antrieben sind aus Übersichtsgründen nicht eingezeichnet worden. Die Vorrichtung 13 gibt das auf den Scheiben 16, 17 aufliegende Profil 12 frei, wenn dieses mittig zum Flurförderer 10, d. h. symmetrisch zu dessen Mittelachse, auf den Scheiben 16, 17 in Längsrichtung positioniert ist. Anschließend wird der Antrieb 18 des Übergabeförderes 19 von der Steuerung 15 betätigt, so daß dieser nach oben (Pfeilrichtung 20) schwenkt und das Profil 12 übernimmt. Als stabförmige Profile werden beispielsweise T-Profile 12.1, Wulst-Profile 12.2 oder Winkel-Profile 12.3 bezeichnet. Der Übergabeförderer ist vorteilhaft als Kettenförderer ausgebildet und weist mehrere zwischen den einzelnen Scheibenpaaren 16, 17 angeordnete Förderarme auf. Nach der Übernahme der Profile 12 werden diese zu Greifern 21, 22 gefördert, die vorzugsweise stationär am Ende des Übergabeförderes 19 angeordnet sind. Dabei können die Greifer zwischen den einzelnen Armen des Übergabeförderes 19 oder seitlich an diesen Armen direkt angeordnet sein. Beide Greifer 21 , 22 sind um einen Drehpunkt 23 schwenkbar. Der obere Greifer 21 ist weiterhin vertikal in Pfeilrichtung 24 parallel zu dem unteren Greiferarm 22 verfahrbar. Die Stirnseite 25 des unteren Greifers 22 dient vorteilhaft als Anschlag für die ankommenden Profile 12, die mit Ihren abstehenden Vorsprüngen 26 an dieser Stirnseite 25 zur Anlage gebracht werden. Anschließend wird der untere und der obere Greifer 22, 21 um den Drehpunkt 23 gedreht, wobei gleichzeitig der obere Greifer 21 parallel zu dem unteren Greifer verfahren wird, so daß das Profil 12 zwischen den beiden Greiferarmen eingespannt ist und in eingespannter Lage axial, d. h. mit offener Stirnseite nach unten, in den Greifern 21, 22 positioniert ist.

Die Greifer 21, 22 mit dem vertikal positionierten Profil 12 sind innerhalb des Verfahrbereiches einer portalartig ausgebildeten Magnettraverse 27 angeordnet, an der Haltemagnete 28 angeordnet sind. Die Magnettraverse 27 ist vertikal an Führungen 29 mittels der Steuerung 15 verfahrbar. Die Führungen 29 sind auf einem vorzugsweise schienengebundenen 30 Wagen 31 angeordnet, in dessen Verfahrbereich der Flurförderer 10 angeordnet ist.

Der Übergabeförderer 19, Wagen 31 und der Flurförderer 10 sind hintereinander in einer Ebene angeordnet, wobei der Flurförderer 10 quer zur Verfahrrichtung des Wagens 31 verfahrbar ist. Die zwischen den Greifern 21, 22 positionierten Profile werden von den Magneten 28 übernommen und vertikal nach oben aus den sich dann öffnenden Greifern entfernt. Vorteilhaft ist hierbei, daß durch die als Anschlag verwendete Stirnfläche 25 des unteren Greifers 22 die Greifhöhe für die Magnete 28 im wesentlichen für alle Profile 12 auf gleicher Höhe festgelegt ist. Die Magnete übernehmen dabei das Profil 12 in den Zwischenräumen zwischen den Greifern 21, 22. Nachdem das Profil 12 in axialer Position und frei von den Greifern 21 an den Magneten 28 der Magnettraverse 27 befestigt ist, verfährt der Wagen 31 zu dem Flurförderer 10. Der Flurförderer 10 weist Profilaufnehmer 32 auf, in die das Profil 12 mit seiner freien Stirnseite hochkant und symmetrisch zur Mittelachse des Flurförderers (mittige Lage) abgelegt wird. Als Flurförderer können auf Rollen 33 verfahrbare Paletten oder auf Schienen verfahrbare Wagen eingesetzt werden. Der automatisch beladene Flurförderer transportiert die Profile nun zu einer Profilbearbeitungsstraße, wie sie in der DE-C2-34 28 139 näher beschrieben ist.

## Patentansprüche

1. Verfahren zum automatischen Beladen eines Flurförderers (10) mit stabförmigen Profilen (12), welche in einer Profilbearbeitungsstation mit einem thermischen Werkzeug bearbeitet und mittels Transporteinrichtungen (13, 14) aus dem Bearbeitungsbereich gefördert werden,
dadurch gekennzeichnet,
daß die bearbeiteten Profile (12) mittels Greifer (21, 22) gefaßt und axial aufgerichtet werden und daß die Profile von einem verfahrbaren Greifer (27, 28) in axialer Position übernommen und zu dem Flurförderer (10) transportiert werden, wo sie lage- und positionsgerecht abgelegt werden.

2. Verfahren nach Anspruch 1,
dadurch gekennzeichnet,
daß die Profile (12) in horizontaler Lage auf einem quer zur Transporteinrichtung (13, 14) angeordneten Übergabeförderer (19) abgelegt und zu den Greifern (21, 22) gefördert werden.

3. Verfahren nach Anspruch 1 oder 2,
dadurch gekennzeichnet,
daß der Übergabeförderer (19), die Greifer (21, 22, 27, 28) und der Flurförderer (10) hintereinander angeordnet und das Profil in mittiger Position zu dem Flurförderer (10) von dem Übergabeförderer übernommen wird.

4. Vorrichtung zum automatischen Beladen eines Flurförderers (10) mit stabförmigen Profilen (12), welche in einer Profilbearbeitungsstation mit einem thermischen Werkzeug bearbeitet und mittels einer Transporteinrichtung (13, 14) aus dem Bearbeitungsbereich gefördert werden und einer Steuerung (15),
dadurch gekennzeichnet,
daß die Profile (12) in horizontaler Lage zwischen zwei Greifern (21, 22) einspannbar sind, daß die Greifer (21, 22) gemeinsam um einen Drehpunkt (23) drehbar sind und daß mit einer Magnettraverse (27) die Profile mittels Magneten (28) von den Greifern (21, 22) übernehmbar sowie zu dem Flurförderer (10) transportierbar sind.

5. Vorrichtung nach Anspruch 4,
dadurch gekennzeichnet,
daß die Greifer (21, 22) zwischen bzw. neben den Armen des Übergabeförderes (19) stationär angeordnet sind und der Untere um einen Drehpunkt (23) drehbar und der Obere um den Drehpunkt (23) drehbar und parallel zu dem Unteren verfahrbar ist.

6. Vorrichtung nach Anspruch 4 oder 5,
dadurch kennzeichnet,
daß die portalartig ausgebildete Magnettraverse (28) an Führungen (29) vertikal verfahrbar ist und die Führungen (29) auf einen horizontal verfahrbaren Wagen (31) angeordnet sind.

7. Vorrichtung nach einem der Ansprüche 4 bis 6,
dadurch gekennzeichnet,
daß im Verfahrbereich des Wagens (31) der Flurförderer (10) angeordnet ist, welcher auf einer Laufbahn (33) bewegbar ist und Profilaufnehmer (32) aufweist, zwischen denen das Profil in axialer Lage ablegbar ist.

8. Vorrichtung nach einem der Ansprüche 4 bis 7,
dadurch gekennzeichnet,
daß der Flurförderer (10) als Palette oder schienengebundener Wagen ausgebildet ist.

9. Vorrichtung nach einem der Ansprüche 4 bis 8,
dadurch gekennzeichnet,
daß die Profile (12) mittels einer gesteuerten Vorrichtung (13) aus dem Bearbeitungsbereich der Profilbearbeitungsstation gefördert und in symmetrischer Position zu einer Mittelachse des Flurförderers (10) auf der Transporteinrichtung (14) abgelegt und von dem Übergabeförderer (19) in dieser Lage übernommen werden.

## Claims

1. Process for automatically loading a floor conveyor (10) with rod-shaped profiles (12), which are machined, using a thermal tool, in a profile-machining bay and are conveyed out of the machining area by means of transport mechanisms (13, 14), characterised in that the machined profiles (12) are grasped by means of grabs (21, 22) and set axially upright and in that the profiles are taken up in the axial position by a mobile grab (27, 28) and transported to the floor conveyor (10), where they are deposited in the correct attitude and position.

2. Process according to Claim 1, characterised in that the profiles (12) are deposited in a horizontal attitude on a delivery conveyor (19) disposed transversely to the transport mechanism (13, 14) and are conveyed to the grabs (21, 22).

3. Process according to Claim 1 or 2, characterised in that the delivery conveyor (19), the grabs (21, 22, 27, 28) and the floor conveyor (10) are disposed one behind the other and the profile is taken up by the delivery conveyor in a position centric to the floor conveyor (10).

4. Device for automatically loading a floor conveyor (10) with rod-shaped profiles (12), which are machined, using a thermal tool, in a profile-machining bay and are conveyed out of the machining area by means of a transport mechanism (13, 14) and with a control system (15), characterised in that the profiles (12) can be clamped in a horizontal attitude between two grabs (21, 22), in that the grabs (21, 22) are jointly rotatable about a centre of rotation (23) and in that, using a magnetic traversing saddle (27), the profiles can be taken up from the grabs (21, 22) by means of magnets (28) and transported to the floor conveyor (10).

5. Device according to Claim 4, characterised in that the grabs (21, 22) are disposed in a stationary arrangement between or alongside the arms of the delivery conveyor (19) and the lower grab is rotatable about a centre of rotation (23) and the upper grab is rotatable about the centre of rotation (23) and can be moved parallel to the lower grab.

6. Device according to Claim 4 or 5, characterised in that the magnetic traversing saddle (27) of portal-like configuration can be moved vertically on guides (29) and the guides (29) are disposed on a horizontally mobile truck (31).

7. Device according to one of Claims 4 to 6, characterised in that the floor conveyor (10) is disposed in the area of travel of the truck (31), which floor conveyor is movable on a runway (33) and exhibits profile take-ups (32), between which the profile can be deposited in an axial attitude.

8. Device according to one of Claims 4 to 7, characterised in that the floor conveyor (10) is configured as a pallet or as a track-bound truck.

9. Device according to one of Claims 4 to 8, characterised in that the profiles (12) are conveyed out of the machining area of the profile-machining bay by means of a controlled device (13) and are deposited on the transport mechanism (14) in a position symmetrical to a centre axis of the floor conveyor (10) and are taken up by the delivery conveyor (19) in this attitude.

## Revendications

1. Procédé de chargement automatique d'un convoyeur de sol (10) avec des profilés (12) en forme de barres, qui sont usinés dans un poste d'usinage de profilés avec un outil thermique et sont évacués de la zone d'usinage par des installations de transport (13, 14), caractérisé en ce que les profilés usinés (12) sont pris par des organes de préhension (21, 22) et sont alignés axialement et ces profilés sont transférés d'un organe de préhension mobile (27, 28) en position axiale pour être transportés sur le convoyeur de sol (10) sur lequel ils sont déposés en position et en situation correctes.

2. Procédé selon la revendication 1, caractérisé en ce que les profilés (12) sont déposés en position horizontale sur un convoyeur de transfert (19) disposé transversalement par rapport à la direction de transfert (13, 14) et ces profilés sont évacués vers les organes de préhension (21, 22).

3. Procédé selon la revendication 1 ou 3, caractérisé en ce que le convoyeur de transfert (19), les organes de préhension (21, 22, 27, 28) et le convoyeur de sol (10) sont disposés les uns derrière les autres et en ce que le profilé est reçu en position centrale du convoyeur de sol (10) par le convoyeur de transfert.

4. Dispositif de chargement automatique d'un convoyeur de sol (10) avec des profilés (12) en forme de barres, qui sont usinés dans un poste d'usinage de profilés à l'aide d'un outil thermique et sont transférés hors de la zone d'usinage par une installation de transport (13, 14) ainsi qu'une installation de commande (15), caractérisé en ce que les profilés (12) se fixent en position horizontale entre deux organes de préhension (21, 22), ces organes de préhension (21, 22) pouvant tourner en commun autour d'un point de rotation (23) et une traverse magnétique (27) reprend les profilés à partir des organes de préhension (21, 22) par des aimants (28) et les transporte vers le convoyeur de sol (10).

5. Dispositif selon la revendication 4, caractérisé en ce que les organes de préhension (21, 22) sont montés de manière fixe entre ou à côté des bras du convoyeur de transfert (19) et l'organe de préhension inférieur peut tourner autour d'un point de rotation (23) et l'organe de préhension supérieur autour du point de rotation (23), parallèlement à l'organe de préhension inférieur.

6. Dispositif selon la revendication 4 ou 5, caractérisé en ce que la traverse magnétique (28) en forme de portique est mobile verticalement sur des guides (29) et ces guides (29) sont portés par un chariot (31) mobile horizontalement.

7. Dispositif selon l'une des revendications 4 à 6, caractérisée en ce que le convoyeur de sol (10) est prévu dans la zone de déplacement du chariot (31), convoyeur sur lequel se déplace un chemin de circulation (33) et qui comporte un organe de préhension de profilé (32) entre lesquels se dépose le profilé en position axiale.

8. Dispositif selon l'une des revendications 4 à 7, caractérisé en ce que le convoyeur de sol (10) est en forme de palette ou de chariot à rails.

9. Dispositif selon l'une des revendications 4 à 8, caractérisé en ce que les profilés (12) sont évacués hors de la zone d'usinage du poste d'usinage de profilés par un dispositif commandé (13) et sont déposés en position symétrique par rapport à l'axe médian du convoyeur de sol (10) sur l'installation de transport (14) pour être repris dans cette position par le convoyeur de transfert (19).
